(19) Europäisches Patentamt
European Patent Office
Office européen des brevets

(11) **EP 2 114 168 B1**

(12) **EUROPEAN PATENT SPECIFICATION**

(45) Date of publication and mention
of the grant of the patent:
**15.06.2011 Bulletin 2011/24**

(21) Application number: **08714011.7**

(22) Date of filing: **25.01.2008**

(51) Int Cl.:
*A23L 1/212* (2006.01)    *A21D 2/36* (2006.01)

(86) International application number:
**PCT/US2008/052049**

(87) International publication number:
**WO 2008/094830 (07.08.2008 Gazette 2008/32)**

(54) **PRODUCTION OF SHEETED FRUIT AND VEGETABLE SNACKS**

HERSTELLUNG VON SCHICHTFÖRMIGEN FRUCHT- UND GEMÜSE-SNACKS

PRÉPARATION D'EN-CAS SOUS FORME DE FEUILLES À BASE DE FRUITS ET DE LÉGUMES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.01.2007 US 669751**

(43) Date of publication of application:
**11.11.2009 Bulletin 2009/46**

(73) Proprietor: **Frito-Lay North America, Inc.**
**Plano, TX 75024-4099 (US)**

(72) Inventors:
• **BAKER, Rosemary, Shine**
**Carrollton, TX 75007 (US)**
• **CREMER, Brenda, K.**
**Salem, OR 97305 (US)**
• **CROSBY, Thomas, George**
**Frisco, TX 75034 (US)**
• **LEUNG, Henry, Kin-hang**
**Plano, TX 75093 (US)**
• **MANIS, Bridget**
**Frisco, TX 75034 (US)**
• **MEJIA, Carla**
**Plano, TX 75034 (US)**
• **MILLER, Kelly, Sam**
**The Colony, TX 75093 (US)**

• **MORIARITY, Nancy, J.**
**Crystal Lake, IL 60012 (US)**
• **NIERMANN, Jason, Thomas**
**Frisco, TX 75034 (US)**
• **ROOT, Timothy, F.**
**Medford, OR 97501 (US)**
• **SHEPPARD, Mark, W.**
**Oregon City, OR 97045 (US)**
• **STALDER, Jim**
**Dallas, TX 75229 (US)**
• **WATERS, Beverly, L.**
**Cedar Hill, TX 75104 (US)**
• **WAYNE, Jo, Ellen**
**Tualatin, OR 97062 (US)**

(74) Representative: **Jenkins, Peter David**
**Page White & Farrer**
**Bedford House**
**John Street**
**London WC1N 2BF (GB)**

(56) References cited:
EP-A1- 0 331 820      EP-A1- 1 872 666
WO-A1-2007/099506     GB-A- 1 200 523
GB-A- 2 428 958       US-A- 4 970 084
US-A- 5 523 106       US-A- 6 086 933
US-A1- 2002 034 571   US-A1- 2006 286 270
US-B1- 6 251 466      US-B1- 6 352 730
US-B2- 7 097 869

**Description**

BACKGROUND OF THE INVENTION

1. Technical Field

The present invention relates to a method for making an improved baked snack food and more particularly to a method for making a baked, sheeted snack food having high contents of fruits or vegetables and a shape and texture similar to a potato crisp.

2. Description of Related Art

Baked snack foods such as potato chips are popular consumer items for which there exists a great demand. Potato chips have a light, crispy texture and can be prepared by cooking slices of whole potatoes. They can also be created by using potato flakes and water to create a starchy dough. The dough is sheeted, cut into pieces of a desired shape, and cooked. The dough is compressed between a pair of counter rotating sheeter/cutter rollers that are located closely together, thereby providing a pinch point through which the dough is formed into sheets and cut into a desired shape. Often the desired snack piece shape is that of a square or circle. After the dough is cut into pieces, the pieces are transported towards and through an oven, which reduces their moisture content. The snack pieces are then sent to be packaged.

Although potatoes fall into the broad category of vegetables, the nutritional benefits offered by potatoes are different from the nutritional benefits offered by other more colorful, less starchy vegetables. Because potato starch is the main source of nutrition in conventional potato chips, a snack chip that prominently features other vegetables as additional sources of nutrition is an improvement over potato chips.

In recent years, consumer demand has been dramatically increasing for healthy foods in general, and healthy snack foods in particular. Nutritious snacks can ideally meet several criteria that include limits on the amount of fat, including saturated and trans-fatty acids, cholesterol, sodium, and added sugar. Preferably, the criteria should also include products formulated to have specific health or wellness benefits. Specifically, a nutritious snack might contain, per serving of about 28 grams (1 ounce serving), no more than 5g of fat, low in saturated fat, zero trans-fatty acids, less than 25% calories from added sugar, and no more than 240 milligrams of sodium.

Fruits and non-starchy vegetables are generally good sources of vitamins, minerals and other healthy compounds such as anti-oxidants. Different fruits and vegetables are rich in different nutrients, and the United States Department of Agriculture (USDA) recommends consumption of between 5 and 13 servings of a variety of fruit and vegetables per day, depending on the specific individual's needs. According to the Food and Drug Administration, a diet that is high in fiber can reduce a person's risk of certain cancers, diabetes, digestive disorders, and heart diseases, as well as aid weight management. Furthermore, vitamins and minerals are widely recognized as part of a healthy diet, and antioxidants may reduce the risk of heart disease and cancer.

Prior art fruit and vegetable snack foods generally take the form of dehydrated slices of whole fruits or vegetables. These prior art dehydrated slices are not sheeted snack chips and do not have the light, crispy texture desired by consumers. Sheeted fruit or vegetable chips in the prior art have included trivial or insubstantial amounts of fruit or vegetables, thus they are not nutritionally different from traditional potato chips. No prior art snack food has been able to deliver high levels of fruits or vegetables, along with the additional hallmarks of nutritious snacks listed above, in the form of a light, crispy snack chip produced from sheeted dough.

Consequently, the need exists for a healthy, nutritious snack chip having a high content of fruits or vegetables and a light, crispy texture.

EP-A-0331820 discloses expanded crunchy snacks including dried vegetables and/or fruits.

US-A-4970084 discloses potato-based chip products containing intact non-potato pieces, such as vegetable pieces.

SUMMARY OF THE INVENTION

The present invention provides a vegetable chip comprising by weight: 10% to 16% modified starch dry matter; 20% to 30% rice flour dry matter; 5% to 15% whole oat flour dry matter; 20% to 30% potato flakes dry matter; at least 14% vegetable solids; less than about 3% corn oil; and less than about 4% water.

The present invention further provides a vegetable chip dough comprising by weight: 5% to 15% modified starch;10% to 30% rice flour;3% to 12% whole oat flour; 10% to 30% potato flakes; at least 8% vegetable powder; less than about 3% corn oil; less than about 1% glycerides; and 30% to 40% water.

The present invention further provides a fruit chip comprising by weight: 10% to 16% modified starch dry matter; 15% to 25% rice flour dry matter; 5% to 15% whole oat flour dry matter; 15% to 5% potato flakes dry matter; at least 20% fruit solids; less than about 3% corn oil; and less than about 4% water.

The present invention further provides a fruit chip dough comprising by weight: 5% to 15% modified starch;

8% to 20% rice flour; 3% to 15% whole oat flour; 8% to 20% potato flakes; at least 12% fruit powder; less than about 3% corn oil; and 27% to 37% water.

The present invention thus provides a great tasting, healthy snack chip having a high content of fruit or vegetable solids, and a form and texture similar to a potato chip. In one embodiment, the snack chip of the present invention preferably has at least 1/3 serving of vegetables or fruit per serving of about 28 grams (1 ounce serving) of snack chips. In another embodiment, the snack chip of the present invention has at least 1/2 serving of vegetables or fruit per serving of about 28 grams (1 ounce serving). In still another embodiment, the snack chip of the present invention has at least 1 serving of vegetables or fruit per serving of about 28 grams (1 ounce serving).

Preferred features of the present invention are defined in the dependent claims.

In one preferred aspect of the invention, a powdered blend of fruit solids is used as a healthy ingredient in sheeted, baked snack chips. In another preferred aspect of the invention, a powdered blend of vegetable solids is used as a healthy ingredient in sheeted, baked snack chips. In yet another preferred aspect of the invention, blends of modified starch, whole oat flour, rice flour and potato flakes are used to give the snack chips a light, crispy texture similar to a potato chip. These as well as additional features and advantages of the present invention will become apparent in the following written description.

BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying drawings, wherein:

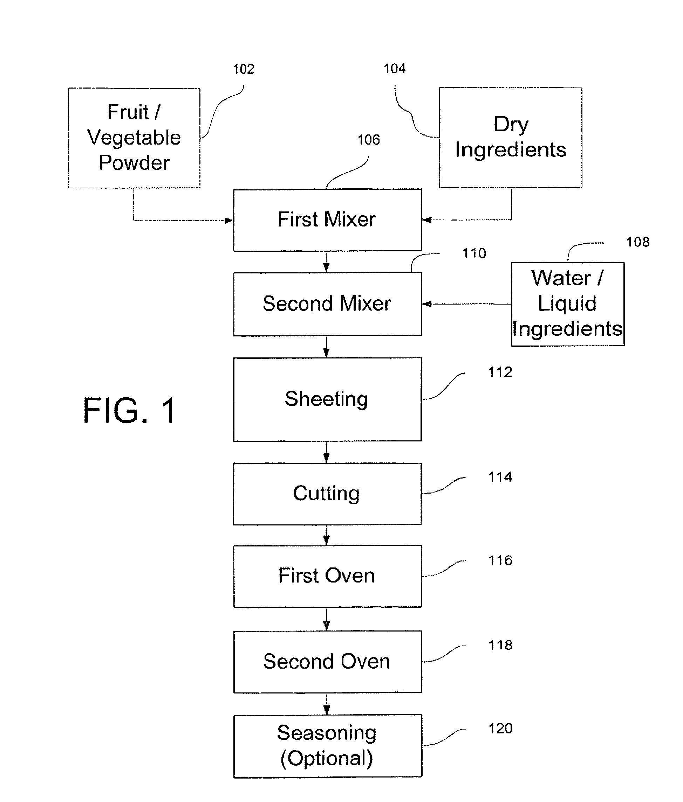

**Figure 1** is a flowchart indicating the processing steps for the present invention.

DETAILED DESCRIPTION

The baked snack chips of the present invention are high in vegetable or fruit content. The nutritional goals for the snack chips of the present invention include, per serving of about 28 grams (1 ounce serving) of snack chips: no more than 5g of fat, 1 gram or less of saturated fat, zero trans-fatty acids, less than 25% calories from added sugar, and no more than 240 milligrams of sodium. As used herein, the term fruit is used in the culinary sense and includes those botanical fruits that are sweet and fleshy. Examples of fruit include, without limitation, apple, strawberry, blueberry, cranberry, plum, peach, mango, banana, pear, grape and orange. The term vegetable is used herein in the culinary sense and includes those plant fruits that are savory, as opposed to sweet. The term vegetable, as used herein, only includes non-starchy vegetables and specifically excludes potatoes and other starchy vegetables, such as sweet potatoes, sweet corn, yarns, taro, plantains, green peas and lentils. Examples of non-starchy vegetables include, without limitation, pumpkin, tomato, onion, bell pepper, beet, cucumber, broccoli and squash. Each of the different fruits and non-starchy vegetables used in the present invention are rich in different nutrients and have nutritional benefits different from potatoes and other starchy vegetables.

The ingredient that gives the baked chips of the present invention their high content of vegetables and fruits is a powderized blend of several different fruits or vegetables. In one preferred embodiment, the baked chips of the present invention incorporate at least 1/3 serving of fruits or vegetables per serving of about 28 grams (1 ounce serving) of the snack chips. In another preferred embodiment, the baked chips of the present invention incorporate at least 1/2 serving of fruits or vegetables per serving of about 28 grams (1 ounce serving) of the snack chips. In yet another preferred embodiment, the baked chips of the present invention incorporate at least 1 serving of fruits or vegetables per serving of about 28 grams (1 ounce serving) of the snack chips.

The United States Department of Agriculture (USDA) defines a serving of vegetables as 1/2 cup of chopped vegetables. For example, 1/2 cup of (2.54cm) 1 inch cubes of raw pumpkin constitutes 1 serving of pumpkin, and 1/2 cup of chopped or sliced raw tomatoes constitutes 1 serving of tomato under the USDA guidelines. A serving of vegetables can be understood as having a moisture content and a solids content. Vegetable solids and fruit solids are defined herein as the non-water components of vegetables and fruits, respectively. Thus, a serving of vegetables comprises a vegetable solids content on a dry basis and a serving of fruit comprises a fruit solids content on a dry basis. The USDA National Nutrient Database for Standard Reference defines the weight of the edible portion of a vegetable in that 1/2 cup and defines the average moisture and thus the vegetable solids content of the edible portion of a vegetable. **Table 1**, for example, depicts the nutrient profile for 1-cup or 180 grams of a red, ripe, raw, year round average tomato as accessed at http://www.nal.usda.gov/fnic/foodcomp/search/.

**Table 1**. Tomatoes, red, ripe, raw, year round average

| Nutrient | Units | Value per 100 | Number of Data grams points Error | Std. | 1.00 X 1 cup, chopped or sliced<br>-------<br>180g |
|---|---|---|---|---|---|
| **Proximates** | | | | | |
| Water | g | 94.50 | 33 | 0.159 | 170.10 |
| energy | kcal | 18 | 0 | | 32 |
| Energy | kj | 75 | 0 | | 135 |
| Protein | g | 0.88 | 19 | 0.039 | 1.58 |
| Total lipid (fat) | g | 0.20 | 26 | 0.034 | 0.36 |
| Ash | g | 0.50 | 19 | 0.018 | 0.90. |
| Carbohydrate, by difference | g | 3.92 | 0 | | 7.06 |
| Fiber, total dietary | g | 1.2 | 5 | 0.234 | 2.2 |
| Sugars, total | g | 2.63 | 0 | | 4.73 |
| Sucrose | g | 0.00 | 12 | 0.002 | 0.00 |
| Glucose (dextrose) | g | 1.25 | 16 | 0.135 | 2.25 |
| Fructose | g | 1.37 | 17 | 0.073 | 2.47 |
| Lactose | g | 0.00 | 9 | 0 | 0.00 |
| Maltose | g | 0.00 | 9 | 0 | 0.00 |
| Galactose | g | 0.00 | 4 | 0 | 0.00 |
| Starch | g | 0.00 | 4 | 0 | 0.00 |
| USDA National Nutrient Database for Standard Reference, Release 19 (2006) | | | | | |

As used herein, a serving of fruit or a serving of vegetables is defined as the amount of fruit solids or vegetable solids content that is equivalent to 1/2 cup (118 cubic centimeters) of chopped fruit or vegetables on a dry basis based on the USDA National Nutrient Database for Standard Reference, Release 19, 2006. According to Table 1, one cup of red, ripe, raw, year round average tomatoes weighs 180 grams, has a water content of 94.5 % by weight and a vegetable solids content of 5.5%. One vegetable serving of raw tomatoes (1/2 cup) has a total weight of 90 grams. Consequently, 4.95 grams (5.5% solids content x 90 grams total weight) of tomato solids in a finished product is equivalent to one serving of vegetables. (As known to those skilled in the art, vegetable powders typically have an intrinsic moisture component, e.g., tomato powder may comprise less than about 4% moisture by weight. Consequently, the amount of tomato powder needed for one serving of vegetables may not exactly correspond to the amount of tomato solids needed for one serving of vegetables.) Thus, a snack chip having a one-third vegetable serving would have approximately 1.65 grams of tomato solids in a serving of about 28 grams (1 ounce serving) of chips, a snack chip having a one-half vegetable serving would have approximately 2.48 grams of tomato solids in a serving of about 28 grams (1 ounce serving) of chips, and a snack chip having one vegetable serving would have approximately 4.95 grams of tomato solids in a serving of about 28 grams (1 ounce serving) of chips. Consequently, in one embodiment, vegetable powder can be added in an amount sufficient to provide for a one-third vegetable serving, in a preferred embodiment in an amount sufficient to provide for a one-half vegetable serving, and in another preferred embodiment in an amount sufficient to provide for one vegetable serving. As used herein, one serving of fruit or one serving of vegetables is defined as the amount of fruit or vegetable solids that is equivalent to 1/2 cup (118 cubic centimeters) of a chopped fruit or vegetables on a dry basis based on the USDA National Nutrient Database for Standard Reference, Release 19, 2006.

In one preferred embodiment of the present invention, vegetable powder is used as an ingredient in dough that is sheeted, cut into pieces of a desirable shape and cooked to produce vegetable chips. The term vegetable powder, as used herein, is defined as partially dehydrated flakes of vegetable solids. Typically, vegetable powder will contain between about 1% and about 4% moisture. Vegetable powder may also contain ingredients such as rice flour and/or lecithin as processing aids. In one embodiment, the vegetable powder contains pumpkin, tomato, onion, bell pepper, and beet. In a more preferred embodiment, the vegetable powder comprises about 35% to about 45% pumpkin, about 35% to about 45% tomato, about 10% to about 15% onion, about 5% to about 10% bell pepper, and less than about 3% beet. In another embodiment, the vegetable powder contains pumpkin, tomato, and onion. In a more preferred embodiment, the vegetable powder comprises about 75% to about 85% pumpkin, about 5% to about 15% tomato, and about 5% to about 15% onion. These ingredients are preferred due to considerations such as taste, cost, color, browning characteristics during cooking and vegetable solids content per serving.

In another preferred embodiment of the present invention, fruit powder is used as an ingredient in dough that is sheeted, cut into pieces of a desirable shape and cooked to produce fruit chips. The term fruit powder, as used herein, is defined as partially dehydrated flakes of fruit solids. Typically, fruit powder will contain between about 1% and about 4% moisture. Fruit powder may also contain ingredients such as rice flour and/or lecithin as processing aids. In one embodiment, the fruit powder contains apple. In another embodiment, the fruit powder contains apple, blueberry, cranberry, and strawberry. In a more preferred embodiment, the fruit powder comprises about 80% to about 90% apple, about 3% to about 8% strawberry, about 3% to about 8% blueberry, and about 3% to about 8% cranberry. In still another embodiment, the fruit powder contains apple, peach and mango. In a more preferred embodiment, the fruit powder comprises at least about 95% apple, at least about 1% peach and at least about 1% mango. These ingredients are preferred due to considerations such as flavor (sweetness), cost, color, sugar content and fruit solids content.

To produce both the fruit chips and the veggie chips, the fruit or vegetable powders are mixed with dry ingredients, water and oil to form a dough. Optionally, natural or artificial colors can be included as ingredients in the dough. The other dry ingredients help maintain dough cohesiveness and expansion during cooking, and contribute to the final product light, crispy texture and enhanced flavor, among other things. The other dry ingredients are comprised of a dry matter component and a moisture component. The dry matter component of any dry ingredient, as that term is used herein, is defined as the non-water components of that particular dry ingredient. For example, potato flakes have a potato flakes dry matter component and a potato flakes moisture component. The potato flakes dry matter component is defined as all of the non-water components that make up the potato flakes. The moisture component of each dry ingredient, as used herein, is defined as the water component of each dry ingredient.

Thus, the moisture component for the potato flakes is defined as all of the water in the potato flakes. The moisture component of each dry ingredient will typically be less than about 10.5% by weight of the particular dry ingredient.

In one embodiment rice flour is included as an ingredient in the dough to maintain cohesiveness, contribute to the final product texture and reduce breakage of the final product. The rice flour has a rice flour dry matter component and a moisture component. In a more preferred embodiment, the rice flour is pre-gelatinized rice flour. Pre-gelatinized rice flour is rice flour that has a starchy component that has undergone an irreversible loss of molecular order, which allows it to more easily form pastes or gels when mixed with water. An example of pre-gelatinized rice flour suitable for use in the present invention can be obtained from Sage V Foods, under the brand RF GLX080.

In one embodiment, potato flakes are included as an ingredient to help the dough expand as it cooks, and give the final product its light, crispy texture. The potato flakes have a potato flakes dry matter component and a moisture component. Potato flakes are made from potatoes that have been cooked, mashed, and dried. For example, Idaho Pacific Corporation in Ririe, Idaho produces potato flakes under the brand name Potato Flakes #124 that can be used as herein described.

In one embodiment, modified starch is included as an ingredient in the dough to aid cohesiveness, expansion, texture, and breakage reduction. The modified starch has a modified starch dry matter component and a moisture component. An example of a modified starch that can be used in the present invention is XPAND'R starch, available from AE Staley Manufacturing Company, headquartered in London, U.K.

In another embodiment, whole oat flour (one suitable example of which is available from Can-Oat Milling, headquartered in Manitoba, Canada) is included as an ingredient to improve the flavor of the final product and to enhance the nutritional value of the snack by adding whole grain fiber, vitamins and minerals. Whole oat flour has a whole oat flour dry matter component and a moisture component.

In still another embodiment, a mixture of mono-, di-, and/or tri-glycerides are included as an ingredient to reduce the "pillowing" or "blistering" effect that can take place during cooking by providing small vents that allow steam to escape while the snack chip is cooking. The mixture of glycerides has a dry matter component and a moisture component. In another embodiment, hard stock beads are used in place of the glycerides mixture to reduce pillowing or blistering. Hard stock beads, as used herein, are defined as small granules of glycerides which are made of hydrogenated edible oils or non-hydrogenated, high melting fraction of edible oil having a predetermined particle size distribution. A preferred particle size distribution for the hard stock beads is as follows: about 0.58% sit on a U.S. #18 mesh screen, about 18.90% sit on a U.S. #30 mesh screen, about 65.62% sit on a U.S. #60 screen, and about 14.90% pass through a #60 U.S. mesh screen. The melting point of these hard stock glycerides is preferably between about 49˚C and about 82˚C, more preferably between about 57˚C and about 79˚C, and in the preferred embodiment between 60˚C and 71˚C. Glycerides encompassing a range of Iodine Values less than 80 can meet these melting point needs. Examples of other lipids that can be used with the present invention include DATEMs, propylene glycol esters, polyglycerol esters, as well as waxes, sterols and other higher melting lipid compounds. One example of hard stock beads that are suitable for use in the present invention are described in U.S. Patent Number 6,893,673 - Method For Controlling Snack Product Blistering Through The Use Of Solid Lipid Particles, which is owned by the same assignee as the present application. As used herein, the term "glycerides" is defined as covering both the mixture of mono-, di- and/or tri-glycerides and hard stock beads.

In one preferred embodiment of the vegetable chips, water and corn oil are mixed with the vegetable powder and dry ingredients to make a dough high in vegetable content. The resultant dough comprises about 5% to about 15% modified starch, about 10% to about 30% rice flour, about 3% to about 12% whole oat flour, about 10% to about 30% potato flakes, at least 8% vegetable powder, less than about 3% corn oil, less than about 1% glycerides and about 30% to about 40% water. All percentages used herein are by weight unless otherwise noted.

In a more preferred embodiment of the vegetable chips, the resultant dough comprises about 7% to about 14% modified starch, about 15% to about 25% rice flour, about 5% to about 10% whole oat flour, about 15% to about 25% potato flakes, at least 9% vegetable powder, less than about 3% corn oil, less than about 1% glycerides and about 32% to about 38% water.

In a most preferred embodiment of the vegetable chips, the resultant dough comprises about 8% to about 13% modified starch, about 16% to about 23% rice flour, about 5% to about 8% whole oat flour, about 16% to about 23% potato flakes, at least 10% vegetable powder, less than about 3% corn oil, less than about 1% glycerides and about 33% to about 37% water.

In one preferred embodiment of the fruit chips, water and corn oil are mixed with the fruit powder and dry ingredients to make a dough high in fruit content. The resultant dough comprises about 5% to about 15% modified starch, about 8% to about 20% rice flour, about 3% to about 15% whole oat flour, about 8% to about 20% potato flakes, at least 12% fruit powder, less than about 3% corn oil, less than about 1% glycerides and about 27% to about 37% water.

In a more preferred embodiment of the fruit chips, the resultant dough comprises about 6% to about 13% modified starch, about 9% to about 18% rice flour, about 4% to about 12% whole oat flour, about 9% to about 19% potato flakes, at least 13% fruit powder, less than about 3% corn oil, less than about 1% glycerides and about 28% to about 36% water.

In a most preferred embodiment of the fruit chips, the resultant dough comprises about 7% to about 12% modified starch, about 10% to about 17% rice flour, about 5% to about 10% whole oat flour, about 10% to about 18% potato flakes, at least 15% fruit powder, less than about 3% corn oil, less than about 1% glycerides and about 30% to about 35% water.

Referring to **Figure 1**, therein is depicted a flowchart indicating the general processing steps for producing the fruit and vegetable chips of the present invention. In the first processing step, the vegetable or fruit powder **102** and other dry ingredients **104** are mixed in a first mixer **106.** These ingredients are then combined with water and other liquid ingredients **108** in a second mixer **110** to produce a dough. The mixing may occur at room temperature, generally about 20˚C (68˚F) to about 30˚C (86˚F), but preferably occurs at chilled temperatures, with the ambient temperature being between about 7˚C (45˚F) and 18˚C (65˚F) and with the mixer being chilled using water at above about 1.7˚C (35˚F). The dough preferably exits the second mixer between about 16˚C (60˚F) and about 27˚C (80˚F). Controlling the water temperature helps to control the dough temperature.

The dough then undergoes a sheeting step **112,** whereby the dough is compressed between at least one pair of counter rotating sheeter/cutter rollers that are located closely together, thereby providing a pinch point through which the dough is formed into sheets. The sheet of dough for the fruit chips is preferably between about 0.69 mm (0.027 inches) and about 0.89 mm (0.035 inches) thick, and more preferably about 0.84 mm (0.033 inches) thick after the sheeting step. The sheet of dough for the veggie chips is preferably between about 0.79 mm (0.031 inches) and about 0.99 mm (0.039 inches), and more preferably about 0.89 mm (0.035 inches) after the sheeting step. The preferred thickness is preferably accomplished by passing the dough through several successive stages of rollers, with each successive stage having the rollers located progressively closer together, more preferably 2, 3 or 4 stages of rollers. Passing the dough through several stages of rollers minimizes the amount of work done on the dough during the sheeting step by any particular set of rollers, thereby reducing the influence of the sheeting step on the physical properties of the dough that are established during the mixing step. In some cases, especially during sheeting of the stickier fruit chip dough, the rollers are preferably chilled to between about 1.7˚C (35˚F) and about 18˚C (65˚F) to reduce the likelihood of the dough sticking to the rollers.

The sheet of dough is then cut into a plurality of pieces **114,** preferably using a rotary cutting unit. The pieces are then baked in a first oven **116** at an oven temperature between about 177˚C (350˚F) and about 282˚C (540˚F) until they have a moisture content of about 5% to about 15%. The pieces are then baked in a second oven **118** at an oven temperature between about 113˚C (235˚F) and about 138˚C (280˚F) to form vegetable or fruit chips having a final moisture content between about 2% and about 4% of the total product weight. The snack food can then optionally be seasoned **120** in an oil spray and seasoning tumbler and then packaged. For the fruit chips, the seasoning can optionally include aromatic compounds that impart a fruity smell onto the snack chips.

The resultant vegetable chip in one preferred embodiment comprises about 10% to about 16% modified starch dry matter, about 20% to about 30% rice flour dry matter, about 5% to about 15% whole oat flour dry matter, about 20% to about 30% potato flakes dry matter, at least 14% vegetable solids, less than about 3% corn oil and less than about 4% water. The resultant vegetable chip in another preferred embodiment comprises about 12% to about 14% modified starch dry matter, about 23% to about 27% rice flour dry matter, about 8% to about 12% whole oat flour dry matter, about 23% to about 29% potato flakes dry matter, at least 15% vegetable solids, less than about 3% corn oil and less than about 4% water.

The resultant fruit chip in one preferred embodiment comprises about 10% to about 16% modified starch dry matter, about 15% to about 25% rice flour dry matter, about 5% to about 15% whole oat flour dry matter, about 15% to about 25% potato flakes dry matter, at least about 20% fruit solids, less than about 3% corn oil and less than about 4% water. The resultant fruit chip in another preferred embodiment comprises about 12% to about 15% modified starch dry matter, about 18% to about 22% rice flour dry matter, about 8% to about 12% whole oat flour dry matter, about 18% to about 22% potato flakes dry matter, at least about 20% fruit solids, less than about 3% corn oil and less than about 4% water.

**First Example**

The table below illustrates the ingredients and their relative amounts that were used to make a vegetable chip dough according to the present invention:

TABLE 2

| Ingredient | Wt. % Dry Ingredients | Wt. % Dough |
| --- | --- | --- |
| Modified Starch | 13.51% | 9.22% |
| Rice Flour | 27.82% | 18.99% |
| Whole Oat Flour | 10.15% | 6.93% |
| Potato Flakes | 27.31% | 18.64% |
| Vegetable Powder | 16.35% | 11.16% |
| Sugar (granulated) | 3.06% | 2.09% |
| Corn Oil | -- | 1.05% |
| Glycerides | 0.77% | 0.53% |
| Lecithin Powder | 1.03% | 0.70% |
| Added Water | -- | 30.69% |

The table below illustrates the relative amount of each ingredient's dry matter and the relative amount of water remaining in the fully cooked, unseasoned vegetable chips produced using the dough ingredients and relative amounts listed in **Table 2** above.

TABLE 3

| Constituent | Wt.% Final Product |
| --- | --- |
| Modified Starch Dry Matter | 13.21% |
| Rice Flour Dry Matter | 25.76% |
| Whole Oat Flour Dry Matter | 9.40% |
| Potato Flakes Dry Matter | 26.13% |
| Vegetable Solids | 16.41% |
| Sugar Dry Matter | 3.15% |
| Corn Oil | 1.59% |
| Glycerides Dry Matter | 0.80% |

(continued)

| Constituent | Wt.% Final Product |
|---|---|
| Lecithin Dry Matter | 1.05% |
| Water | 2.50% |

In this embodiment, the vegetable powder and other dry ingredients were mixed together in a batch mixer. Next, the well mixed dry ingredients, water and oil were combined in a twin screw continuous wet mixer for about 30 to about 60 seconds to create the dough. The dough exited the mixer at between 20˚C (68˚F) and 31˚C (88˚F). The dough was then sheeted using 4 stages of rollers to produce a sheet of dough about 0.89 mm (0.035 inches) thick. The sheet of dough then passed through a rotary cutting step that produced a plurality of square shaped, ridged pieces of dough. The pieces were then baked in an 8-zone Wolverine jet impingement oven at 191˚C (375˚F) to 293˚C (500˚F) to produce partially baked snack pieces having a total moisture content between 5% and 15% by weight. The partially baked pieces were then allowed to cool. The cooled pieces were then dried in a 2 zone Wenger convection oven at 127˚C (260˚F) to 138˚C (280˚F) until the pieces had a final moisture content between 2% and 4%. The final snack pieces were then seasoned using a tumbler, where they were lightly sprayed with oil and seasoning.

**Second Example**

The table below illustrates the ingredients and their relative amounts that were used to make a fruit chip dough according to the present invention:

TABLE 4

| Ingredient | Wt. % Dry Ingredients | Wt. % Dough |
|---|---|---|
| Modified Starch | 13.59% | 9.45% |
| Rice Flour | 21.64% | 15.04% |
| Whole Oat Flour | 10.20% | 7.09% |
| Potato Flakes | 20.69% | 14.38% |
| Fruit Powder | 25.03% | 17.40% |
| Sugar (granulated) | 6.12% | 4.26% |
| Corn Oil | -- | 1.08% |
| Glycerides | 0.78% | 0.54% |
| Lecithin Powder | 1.03% | 0.72% |
| Monocalcium Phosphate | 0.52% | 0.36% |
| Sodium Bicarbonate | 0.40% | 0.28% |
| Added Water | -- | 29.40% |

The table below illustrates the relative amount of each ingredient's dry matter and the relative amount of water remaining in the fully cooked, unseasoned fruit chips produced using the dough ingredients listed in **Table 4** above.

TABLE 5

| Ingredient | Wt.% Final Product |
|---|---|
| Modified Starch Dry Matter | 13.20% |
| Rice Flour Dry Matter | 19.89% |
| Whole Oat Flour Dry Matter | 9.38% |
| Potato Flakes Dry Matter | 19.66% |
| Fruit Solids | 24.94% |
| Sugar Dry Matter | 6.26% |
| Corn Oil | 1.59% |

(continued)

| Ingredient | Wt.% Final Product |
|---|---|
| Glycerides Dry Matter | 0.79% |
| Lecithin Dry Matter | 1.05% |
| Monocalcium Phosphate Dry Matter | 0.53% |
| Sodium Bicarbonate Dry Matter | 0.41% |
| Water | 2.30% |

In this embodiment, the fruit powder and other dry ingredients were mixed together in a batch mixer. Next, the well mixed dry ingredients, water and other liquid ingredients were combined in a twin screw continuous wet mixer for about 30 to about 60 seconds to create the dough. The dough exited the mixer at between 20˚C (68˚F) and 31˚C (88˚F). The dough was then sheeted using 4 stages of rollers to produce a sheet of dough about 0.84 mm (0.033 inches) thick. The sheet of dough then passed through a rotary cutting step that produced a plurality of square shaped pieces of dough. The pieces were then baked in an 8-zone Wolverine jet impingement oven at 177˚C (350˚F) to 282˚C (540˚F) to produce partially baked snack pieces having a total moisture content between 5% and 15% by weight. The partially baked pieces were then allowed to cool. The cooled pieces were then dried in a 2-zone Wenger convection oven at 113˚C (235˚F) to 121˚C (250˚F) until the pieces had a final moisture content between 2% and 4%. The final snack pieces were then seasoned using a tumbler, where they were lightly sprayed with oil and seasoning.

The vegetable and fruit chips described in the above examples contained at least 1/2 serving of vegetables and fruit, respectively. They also had a light, crispy texture similar to that of a potato crisp. In addition, the fruit and vegetable chips disclosed herein met or exceeded the other preferred nutritional goals. Specifically, the chips disclosed above had, per serving of about 28 grams (1 ounce serving), less than 5g of fat, 1 gram or less of saturated fat, zero trans-fatty acids, less than 25% calories from added sugar, and no more than 240 milligrams of sodium. In sum, the result is a healthy, nutritious snack chip high in vegetable or fruit content and having a light, crispy texture similar to a potato crisp.

**Claims**

1.    A vegetable chip comprising by weight:

> 10% to 16% modified starch dry matter;
> 20% to 30% rice flour dry matter;
> 5% to 15% whole oat flour dry matter;
> 20% to 30% potato flakes dry matter;
> at least 14% vegetable solids;
> less than about 3% corn oil; and
> less than about 4% water.

2.    The vegetable chip of Claim 1 wherein said vegetable solids comprise by weight:

> 35% to 45% pumpkin;
> 35% to 45% tomato;
> 10% to 15% onion;
> 5% to 10% bell pepper; and
> less than about 3% beet.

3.    The vegetable chip of Claim 1 wherein said vegetable solids comprise by weight:

> 75% to 85% pumpkin;
> 5% to 15% tomato; and
> 5% to 15% onion.

4.    The vegetable chip of Claim 1 wherein said vegetable solids comprise at least one-third serving of vegetables per serving of about 28 grams (one ounce serving) of vegetable chips, optionally at least one-half serving of vegetables per serving of about 28 grams (one ounce serving) of vegetable chips, further optionally at least one serving of vegetables per serving of about 28 grams (one ounce serving) of vegetable chips, wherein a serving of vegetables is defined as the amount of vegetable solids content that is equivalent to 1/2 cup (118 cubic centimeters) of chopped vegetables on a dry basis based on the USDA National Nutrient Database for Standard Reference, Release 19, 2006.

5. The vegetable chip of Claim 1 additionally comprising:

less than about 5 grams of fat;
about 1 gram or less of saturated fat;
about 0 grams of trans-fatty acids;
less than about 25% calories from added sugar; and
less than 240 milligrams of sodium.

6. The vegetable chip of any one of Claims 1 to 5 comprising by weight:

12% to 14% said modified starch dry matter;
23% to 27% said rice flour dry matter;
8% to 12% said whole oat flour dry matter;
23% to 29% said potato flakes dry matter;
at least 15% said vegetable solids;
less than about 3% corn oil; and
less than about 4% water.

7. A vegetable chip dough comprising by weight:

5% to 15% modified starch;
10% to 30% rice flour;
3% to 12% whole oat flour;
10% to 30% potato flakes;
at least 8% vegetable powder;
less than about 3% corn oil;
less than about 1% glycerides; and
30% to 40% water.

8. The dough of Claim 7 wherein said vegetable powder comprises by weight:

35% to 45% pumpkin;
35% to 45% tomato;
10% to 15% onion;
5% to 10% bell pepper; and
less than about 3% beet.

9. The dough of Claim 7 wherein said vegetable powder comprises by weight:

75% to 85% pumpkin;
5% to 15% tomato; and
5% to 15% onion.

10. The dough of any one of Claims 7 to 9 comprising by weight:

7% to 14% said modified starch;
15% to 25% said rice flour;
5% to 10% said whole oat flour;
15% to 25% said potato flakes;
at least 9% said vegetable powder;
less than about 3% said corn oil;
less than about 1% said glycerides; and

32% to 38% said water.

**11.** The dough of any one of Claims 7 to 9 comprising by weight:

8% to 13% said modified starch;
16% to 23% said rice flour;
5% to 8% said whole oat flour;
16% to 23% said potato flakes;
at least 10% said vegetable powder;
less than about 3% said corn oil;
less than about 1% said glycerides; and
33% to 37% said water,

**12.** A fruit chip comprising by weight:

10% to 16% modified starch dry matter;
15% to 25% rice flour dry matter;
5% to 15% whole oat flour dry matter;
15% to 25% potato flakes dry matter;
at least 20% fruit solids;
less than about 3% corn oil; and
less than about 4% water.

**13.** The fruit chip of Claim 12 wherein said fruit solids comprise by weight:

80% to 90% apple;
3% to 8% strawberry;
3% to 8% blueberry; and
3% to 8% cranberry;
or
at least 95% apple;
or
at least about 95% apple;
at least about 1% peach; and
at least about 1% mango.

**14.** The fruit chip of Claim 12 wherein said fruit solids comprise at least one-third serving of fruit per serving of about 28 grams (one ounce serving) of fruit chips, at least one-half serving of fruit per serving of about 28 grams (one ounce serving) of fruit chips, further optionally at least one serving of fruit per serving of about 28 grams (one ounce serving) of fruit chips wherein a serving of fruit is defined as the amount of fruit solids content that is equivalent to 1/2 cup (118 cubic centimeters) of chopped fruit on a dry basis based on the USDA National Nutrient Database for Standard Reference, Release 19, 2006.

**15.** The fruit chip of Claim 12 additionally comprising:

less than about 5 grams of fat;
about 1 gram or less of saturated fat;
about 0 grams of trans-fatty acids;
less than about 25% calories from added sugar; and
less than 240 milligrams of sodium.

**16.** The fruit chip of any one of Claims 12 to 15 comprising by weight:

12% to 15% said modified starch dry matter;
18% to 22% said rice flour dry matter;
8% to 12% said whole oat flour dry matter;
18% to 22% said potato flakes dry matter;
at least 20% fruit solids;

less than about 3% said corn oil; and
less than about 4% said water.

17. A fruit chip dough comprising by weight:

5% to 15% modified starch;
8% to 20% rice flour;
3% to 15% whole oat flour;
8% to 20% potato flakes;
at least 12% fruit powder;
less than about 3% corn oil; and
27% to 37% water.

18. The dough of Claim 17 wherein said fruit powder comprises by weight:

80% to 90% apple;
3% to 8% strawberry;
3% to 8% blueberry; and
3% to 8% cranberry;
or
at least 95% apple;
or
at least about 95% apple;
at least about 1% peach; and
at least about 1% mango.

19. The dough of Claim 17 or Claim 18 comprising by weight:

6% to 13% said modified starch;
9% to 18% said rice flour;
4% to 12% said whole oat flour;
9% to 19% said potato flakes;
at least 13% said fruit powder;
less than about 3% said corn oil; and
28% to 36% said water;

optionally the dough comprising by weight:

7% to 12% said modified starch;
10% to 17% said rice flour;
5% to 10% said whole oat flour;
10% to 18% said potato flakes;
at least 15% said fruit powder;
less than about 3% said corn oil; and
30% to 35% said water.

**Patentansprüche**

1. Vegetarischer Snack umfassend in Gewichtsprozent:

10% bis 16% Trockensubstanz modifizierte Stärke;
20% bis 30% Trockensubstanz Reismehl;
5% bis 15% Trockensubstanz Vollwerthafermehl;
20% bis 30% Trockensubstanz Kartoffelflocken;
mindestens 14% pflanzliche Stoffe;
weniger als ca. 3% Getreideöl; und
weniger als ca. 4% Wasser.

**2.** Vegetarischer Snack nach Anspruch 1, wobei die pflanzlichen Stoffe in Gewichtsprozent umfassen:

35% bis 45% Kürbis;
35% bis 45% Tomate;
10% bis 15% Zwiebel;
5% bis 10% Paprikaschote; und
weniger als ca, 3% Rübe.

**3.** Vegetarischer Snack nach Anspruch 1, wobei die pflanzlichen Stoffe in Gewichtsprozent umfassen:

75% bis 85% Kürbis;
5% bis 15% Tomate; und
5% bis 15% Zwiebel.

**4.** Vegetarischer Snack nach Anspruch 1, wobei die pflanzlichen Stoffe mindestens eine Drittelportion Gemüse pro Portion von ca. 28 Gramm (ein Unzen Portion) der vegetarischen Snacks, wahlweise mindestens eine halbe Portion Gemüse pro Portion von ca. 28 Gramm (ein Unzen Portion) der vegetarischen Snacks, darüber hinaus wahlweise mindestens eine Portion Gemüse pro Portion von ca. 28 Gramm (ein Unzen Portion) der vegetarischen Snacks umfassen, wobei eine Portion Gemüse definiert ist als der Anteil des Gehalts an pflanzlichen Stoffen, der einem halben Becher (118 Kubikzentimeter) geschnitzeltes Gemüse auf Trockenbasis entspricht, basierend auf der USDA National Nutrient Database for Standard Reference, Ausgabe 19, 2006.

**5.** Vegetarischer Snack nach Anspruch 1 zusätzlich umfassend:

weniger als ca. 5 Gramm Fett;
ca. 1 Gramm oder weniger gesättigtes Fett;
ca. 0 Gramm trans-Fettsäuren;
weniger als ca. 25% Kalorien aus zugesetztem Zucker; und
weniger als 240 Milligramm Natrium.

**6.** Vegetarischer Snack nach einem der Ansprüche 1 bis 5 umfassend in Gewichtsprozent:

12% bis 14% Trockensubstanz modifizierte Stärke;
23% bis 27% Trockensubstanz Reismehl;
8% bis 12% Trockensubstanz Vollwerthafermehl;
23% bis 29% Trockensubstanz Kartoffelflocken;
mindestens 15% pflanzliche Stoffe;
weniger als ca. 3% Getreideöl; und
weniger als ca. 4% Wasser.

**7.** Teig für einen vegetarischen Snack umfassend in Gewichtsprozent:

5% bis 15% modifizierte Stärke;
10% bis 30% Reismehl;
3% bis 12% Vollwerthafermehl;
10% bis 30% Kartoffelflocken;
mindestens 8% Planzenpulver;
weniger als ca. 3% Getreideöl;
weniger als ca, 1% Glyzeride; und
30% bis 40% Wasser.

**8.** Teig nach Anspruch 7, wobei das Pflanzenpulver in Gewichtsprozent umfasst:

35% bis 45% Kürbis;
35% bis 45% Tomate;
10% bis 15% Zwiebel;
5% bis 10% Paprikaschote; und
weniger als ca. 3% Rübe.

9. Teig nach Anspruch 7, wobei das Pflanzenpulver in Gewichtsprozent umfasst:

   75% bis 85% Kürbis;
   5% bis 15% Tomate; und
   5% bis 15% Zwiebel.

10. Teig nach einem der Ansprüche 7 bis 9 umfassend in Gewichtsprozent:

   7% bis 14% modifizierte Stärke;
   15% bis 25% Reismehl;
   5% bis 10% Vollwerthafermehl;
   15% bis 25% Kartoffelflocken;
   mindestens 9% Pflanzenpulver;
   weniger als ca. 3% Getreideöl;
   weniger als ca. 1% Glyzeride; und
   32% bis 38% Wasser.

11. Teig nach einem der Ansprüche 7 bis 9 umfassend in Gewichtsprozent:

   8% bis 13% modifizierte Stärke;
   16% bis 23% Reismehl;
   5% bis 8% Vollwerthafermehl;
   16% bis 23% Kartoffelflocken;
   mindestens 10% Pflanzenpulver;
   weniger als ca, 3% Getreideöl;
   weniger als ca. 1% Glyzeride; und
   33% bis 37% Wasser.

12. Fruchtsnack umfassend in Gewichtsprozent:

   10% bis 16% Trockensubstanz modifizierte Stärke;
   15% bis 25% Trockensubstanz Reismehl;
   5% bis 15% Trockensubstanz Vollwerthafermehl;
   15% bis 25% Trockensubstanz Kartoffelflocken;
   mindestens 20% Frucht-Feststoffe;
   weniger als ca. 3% Getreideöl; und
   weniger als ca. 4% Wasser.

13. Fruchtsnack nach Anspruch 12, wobei die Frucht-Feststoffe in Gewichtsprozent umfassen:

   80% bis 90% Apfel;
   3% bis 8% Erdbeere;
   3% bis 8% Blaubeere; und
   3% bis 8% Kranbeere;
   oder
   mindestens 95% Apfel;
   oder
   mindestens ca. 95% Apfel;
   mindestens ca. 1% Pfirsich; und
   mindestens ca. 1 % Mango.

14. Fruchtsnack nach Anspruch 12, wobei die Frucht-Feststoffe mindestens eine Drittelportion Frucht pro Portion von ca. 28 Gramm (ein Unzen Portion) der Fruchtsnacks, wahlweise mindestens eine halbe Portion Frucht pro Portion von ca. 28 Gramm (ein Unzen Portion) der Fruchtsnacks, darüber hinaus wahlweise mindestens eine Portion Frucht pro Portion von ca. 28 Gramm (ein Unzen Portion) der Fruchtsnacks umfassen, wobei eine Portion Frucht definiert ist als der Anteil des Gehalts an Frucht-Feststoffen, der einem halben Becher (118 Kubikzentimeter) geschnitzelte Frucht auf Trockenbasis entspricht, basierend auf der USDA National Nutrient Database for Standard Reference, Ausgabe 19, 2006.

**15.** Fruchtsnack nach Anspruch 12 zusätzlich umfassend:

weniger als ca. 5 Gramm Fett;
ca. 1 Gramm oder weniger gesättigtes Fett;
ca. 0 Gramm trans-Fettsäuren;
weniger als ca. 25% Kalorien aus zugesetztem Zucker; und
weniger als 240 Milligramm Natrium.

**16.** Fruchtsnack nach einem der Ansprüche 12 bis 15 umfassend in Gewichtsprozent:

12% bis 15% Trockensubstanz modifizierte Stärke;
18% bis 22% Trockensubstanz Reismehl;
8% bis 12% Trockensubstanz Vollwerthafermehl;
18% bis 22% Trockensubstanz Kartoffelflocken;
mindestens 20% Frucht-Festsoffe;
weniger als ca. 3% Getreideöl; und
weniger als ca. 4% Wasser.

**17.** Teig für einen Fruchtsnack umfassend in Gewichtsprozent:

5% bis 15% modifizierte Stärke;
8% bis 20% Reismehl;
3% bis 15% Vollwerthafermehl;
8% bis 20% Kartoffelflocken;
mindestens 12% Fruchtpulver;
weniger als ca. 3% Getreideöl;
weniger als 1% Glyzeride; und
27% bis 37% Wasser.

**18.** Teig nach Anspruch 17, wobei das Fruchtpulver in Gewichtsprozent umfasst:

80% bis 90% Apfel;
3% bis 8% Erdbeere;
3% bis 8% Blaubeere; und
3% bis 8% Kranbeere;
oder
mindestens 95% Apfel;
oder
mindestens ca. 95% Apfel;
mindestens ca. 1% Pfirsich; und
mindestens ca. 1% Mango.

**19.** Teig nach Anspruch 17 oder 18 umfassend in Gewichtsprozent:

6% bis 13% modifizierte Stärke;
9% bis 18% Reismehl;
4% bis 12% Vollwerthafermehl;
9% bis 19% Kartoffelflocken;
mindestens 13% Fruchtpulver;
weniger als ca. 3% Getreideöl; und
28% bis 36% Wasser;

wahlweise ein Teig umfassend in Gewichtsprozent:

7% bis 12% modifizierte Stärke;
10% bis 17% Reismehl;
5% bis 10% Vollwerthafermehl;
10% bis 18% Kartoffelflocken;

mindestens 15% Fruchtpulver;
weniger als ca. 3% Getreideöl; und
30% bis 35% Wasser.

**Revendications**

1. Chip de légumes comprenant, en poids :

   10 à 16 % de matière sèche d'amidon modifié ;
   20 à 30 % de matière sèche de farine de riz ;
   5 à 15 % de matière sèche de farine complète d'avoine ;
   20 à 30 % de matière sèche de flocons de pommes de terre ;
   au moins 14 % de légumes sous une forme de solides ;
   environ moins de 3 % d'huile de maïs ; et environ moins de 4 % d'eau.

2. Chip de légumes selon la revendication 1, dans laquelle lesdits légumes sur une base solide comprennent, en poids :

   35 à 45 % de citrouille ;
   35 à 45 % de tomate ;
   10 à 15 % d'oignon ;
   5 à 10 % de poivron ; et
   environ moins de 3 % de betterave.

3. Chip de légumes selon la revendication 1, dans laquelle lesdits légumes sous une forme de solides comprennent, en poins :

   75 à 85 % de citrouille ;
   5 à 15 % de tomate ; et
   5 à 15 % d'oignon.

4. Chip de légumes selon la revendication 1, dans laquelle lesdits légumes sous une forme de solides au moins un tiers de portion de légumes par portion d'environ 28 grammes (portion d'une once) de chips de légumes, éventuellement, au moins une moitié de portion de légumes par portion d'environ 28 grammes (portion d'une once) de chips de légumes, encore éventuellement, au moins une portion de légumes par portion d'environ 28 grammes (portion d'une once) de chips de légumes, une portion de légumes étant définie comme la quantité de la teneur en légumes sous une forme de solides équivalant à ½ tasse (118 cm$^3$) de légumes coupés en morceaux sur une base sèche selon la base de données nutritive nationale de l'USDA pour la référence standard, Version 19, 2006.

5. Chip de légumes selon la revendication 1, comprenant en plus :

   environ moins de 5 grammes de matière grasse ;
   environ 1 gramme ou moins de graisse saturée ;
   environ 0 gramme d'acides gras trans ;
   environ moins de 25 % de calories issues de sucre ajouté ; et
   moins de 240 milligrammes de sodium.

6. Chip de légumes selon l'une quelconque des revendications 1 à 5 comprenant, en poins :

   12 à 14 % de ladite matière sèche d'amidon modifié ;
   23 à 27 % de ladite matière sèche farine de riz ;
   8 à 12 % de ladite farine complète d'avoine sur une base sèche ;
   23 à 29 % de ladite matière sèche de flocons de pommes de terre ;
   au moins 15 % desdits légumes sous une forme de solides ;
   environ moins de 3 % d'huile de maïs ; et
   environ moins de 4 % d'eau.

7. Pâte pour chip de légumes comprenant, en poins :

5 à 15 d'amidon modifié ;
10 à 30 % de farine de riz ;
3 à 12 % de farine complète d'avoine ;
10 à 30 % de flocons de pommes de terre ;
au moins 8 % de poudre de légumes ;
environ moins de 3 % d'huile de maïs ;
environ moins de 1 % de glycérides ; et 30 à 40 % d'eau.

**8.** Pâte selon la revendication 7, dans laquelle ladite poudre de légumes comprend, en poins

35 à 45 % de citrouille ;
35 à 45 % de tomate ;
10 à 15 d'oignon ;
5 à 10 % de poivron ; et
environ moins de 3 % de betterave.

**9.** Pâte selon la revendication 7, dans laquelle ladite poudre de légumes comprend, en poids :

75 à 85 % de citrouille ;
5 à 15 % de tomate ; et
5 à 15 % d'oignon.

**10.** Pâte selon l'une quelconque des revendications 7 à 9, comprenant, en poids :

7 à 14 % dudit amidon modifié ;
15 à 25 % de ladite farine de riz ;
5 à 10 % de ladite farine complète d'avoine ;
15 à 25 % desdits flocons de pommes de terre ;
au moins 9 % de ladite poudre de légumes ;
environ moins de 3 % de ladite huile de maïs;
environ moins de 1 desdits glycérides ; et
32 à 38 % de ladite eau.

**11.** Pâte selon l'une quelconque des revendications 7 à 9, comprenant, en poids :

8 à 13 % dudit amidon modifie ;
16 à 23 % de ladite farine de riz ;
5 à 8 % de ladite farine complète d'avoine ;
16 à 23 % desdits flocons de pommes de terre ;
au moins 10 % de ladite poudre de légumes ;
environ moins de 3 % de ladite huile de maïs;
environ moins de 1 % desdits glycérides ; et
33 à 37 % de ladite eau.

**12.** Chip de fruits comprenant, en poids :

10 à 16 % de matière sèche d'amidon modifié ;
15 à 25 % de matière sèche de farine de riz ;
5 à 15 % de matière sèche de farine complète d'avoine ;
15 à 25 % de matière sèche de flocons de pommes de terre ;
au moins 20 % de fruits sous une forme de solides ;
environ moins de 3 % d'huile de maïs ; et
environ moins de 4 % d'eau.

**13.** Chip de fruits selon la revendication 12, dans laquelle lesdits fruits sous une forme de solides comprennent, en poins :

80 à 90 % de pomme ;
3 à 8 % de fraise ;

3 à 8 % de myrtille ; et
3 à 8 % de canneberge ;
ou
au moins 95 % de pomme ;
ou
environ au moins 95 % de pomme ;
environ au moins 1 % de pêche ; et
environ au moins 1% % de mangue.

**14.** Chip de fruits selon la revendication 12, dans laquelle lesdits fruits sous une forme de solides comprennent au moins un tiers de portion de fruits par portion d'environ 28 grammes (portion d'une once) de chips de fruits, au moins une moitié de portion de fruits par portion d'environ 28 grammes (portion d'une once) de chips de fruits, encore éventuellement, au moins une portion de fruits par portion d'environ 28 grammes (portion d'une once) de chips de fruits, une portion de fruits étant définie comme la quantité de la teneur en fruits sous une forme de solides équivalant à ½ tasse (118 cm$^3$) de fruits coupés en morceaux sur une base sèche selon la base de données nutritive nationale de l'USDA pour la référence standard, Version 19, 2006.

**15.** Chip de fruits selon la revendication 12, comprenant en plus :

environ moins de 5 grammes de matière grasse ;
environ 1 gramme ou moins de graisse saturée ;
environ 0 gramme d'acides gras trans ;
environ moins de 25 % de calories issues de sucre ajouté ; et
moins de 240 milligrammes de sodium.

**16.** Chip de fruits selon l'une quelconque des revendications 12 à 15 comprenant, en poids :

12 à 15 % de ladite matière sèche d'amidon modifié ;
18 à 22 % de ladite matière sèche de farine de riz ;
8 à 12 % de ladite matière sèche de farine complète d'avoine ;
18 à 22 % de ladite matière sèche de flocons de pommes de terre ;
au moins 20 % de fruits sous une forme de solides ;
environ moins de 3 % de ladite huile de maïs; et
environ moins de 4 % de ladite eau.

**17.** Pâte pour chips de fruits comprenant, en poins :

5 à 15 % d'amidon modifié ;
8 à 20 % de farine de riz ;
3 à 15 % de farine complète d'avoine ;
8 à 20 % de flocons de pommes de terre ;
au moins 12 % de poudre de fruits ;
environ moins de 3 % d'huile de maïs ; et
27 à 37 % d'eau.

**18.** Pâte selon la revendication 17, dans laquelle ladite poudre de fruits comprend, en poins

80 à 90 % de pomme ;
3 à 8 % de fraise ;
3 à 8 % de myrtille ; et
3 à 8 % de canneberge ;
ou
au moins 95 % de pomme ;
ou
environ au moins 95 % de pomme ;
environ au moins 1 % de pêche ; et
environ au moins 1 % de mangue.

**19.** Pâte selon la revendication 17 ou la revendication 18 comprenant, en poins

6 à 13 % dudit amidon modifié ;
9 à 18 % de ladite farine de riz ;
4 à 12 % de ladite farine complète d'avoine ;
9 à 19 % desdits flocons de pommes de terre ;
au moins 13 % de ladite poudre de fruits ;
environ moins de 3 % de ladite huile de maïs ; et 28 à 36 % de ladite eau ;

éventuellement, la pâte comprenant en poins

7 à 12 % dudit amidon modifié ;
10 à 17 % de ladite farine de riz ;
5 à 10 % de ladite farine complète d'avoine ;
10 à 18 % desdits flocons de pommes de terre ;
au moins 15 % de ladite poudre de fruits ;
environ moins de 3 % de ladite huile de maïs ; et
30 à 35 % de ladite eau.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0331820 A
- US 4970084 A
- US 6893673 B